# EUROPÄISCHE PATENTSCHRIFT

(11) **EP 3 387 246 B1**
(45) Veröffentlichungstag und Bekanntmachung des Hinweises auf die Patenterteilung: **05.02.2020**
(21) Anmeldenummer: 16795067.4
(22) Anmeldetag: 14.11.2016
(51) Int. Cl.: F02M 26/16, F02M 26/21, F02M 26/64, F02M 26/70, F02M 26/06, F02D 9/10, F02D 9/02

(54) **REGELVORRICHTUNG FÜR EINE VERBRENNUNGSKRAFTMASCHINE**
REGULATING DEVICE FOR AN INTERNAL COMBUSTION ENGINE
DISPOSITIF DE RÉGULATION POUR UN MOTEUR À COMBUSTION INTERNE

(30) Priorität: 11.12.2015 DE 102015121617
(43) Veröffentlichungstag der Anmeldung: 17.10.2018
(73) Patentinhaber: Pierburg GmbH, 41460 Neuss (DE); Ford-Werke GmbH, 50735 Köln (DE)
(72) Erfinder: VIERKOTTEN, Dirk, 53804 Much (DE); FLENDER, Maximilian, 40477 Düsseldorf (DE); VIGILD, Christian, 52457 Aldenhoven (DE); KUSKE, Andreas, 6243 CM Geulle (NL); SOMMERHOFF, Franz Arnd, 52033 Aachen (DE); KINDL, Helmut, 52066 Aachen (DE); KEMMERLING, Jörg, 52156 Monschau (DE); SMILJANOVSKI, Vanco, 50181 Bedburg (DE); FRIEDERICHS, Hanno, 52072 Aachen (DE)
(74) Vertreter: Patentanwälte ter Smitten Eberlein-Van Hoof Rütten Partnerschaftsgesellschaft mbB
(86) Internationale Anmeldenummer: PCT/EP2016/077574
(87) Internationale Veröffentlichungsnummer: WO 2017/097541

(56) Entgegenhaltungen:
- EP-A1- 1 408 263
- DE-A1- 10 240 762
- DE-A1-102006 051 987
- DE-A1-102014 200 699
- DE-B4-102012 101 851
- JP-A- 2001 098 959

## Beschreibung

Die Erfindung betrifft eine Regelvorrichtung für eine Verbrennungskraftmaschine mit einem Ansaugkanal, einem Abgasrückführkanal, der in den Ansaugkanal mündet, einem Gehäuse, in dem der Ansaugkanal und der Abgasrückführkanal ausgebildet sind, einer als Drehachse dienenden Welle, auf der ein Regelkörper exzentrisch gelagert ist, und die senkrecht zu den Mittelachsen des Ansaugkanals und des Abgasrückführkanals angeordnet ist, wobei in einer ersten Endposition, in der der Ansaugkanal stromaufwärts einer Mündung des Abgasrückführkanals zumindest gedrosselt ist, ein Normalenvektor einer ersten Oberfläche des Regelkörpers zur stromaufwärtigen Seite des Ansaugkanals weist und in einer zweiten Endposition, in der der Abgasrückführkanal verschlossen ist, ein Normalenvektor einer zweiten Oberfläche des Regelkörpers zum Abgasrückführkanal weist.

Derartige Regelvorrichtungen werden in Verbrennungskraftmaschinen genutzt, um den in einen Zylinder eines Verbrennungsmotors einzuleitenden Gasstrom bezüglich seiner Zusammensetzung von zurückgeführten Abgasmengen oder frisch angesaugten Luftmengen zu steuern. Je nach Betriebszustand des Verbrennungsmotors sind zur Erreichung minimaler Abgaswerte und maximaler Leistungswerte unterschiedliche Mischungsverhältnisse einzustellen.

Für eine Regelung können entweder zwei getrennte Ventile verwendet werden, wobei dann auch eine Gesamtmengenregelung über die beiden Ventile möglich ist, oder diese Regelventile enthalten zwei Ventilkörper, die über eine gemeinsame Stellvorrichtung betätigt werden, so dass lediglich das Gemisch verändert wird. Diese Ausführung wird insbesondere bei aufgeladenen Motoren, bei denen die Gesamtansaugmenge über die Leistung des Verdichters gesteuert werden kann, genutzt. Um eine entsprechende Regelvorrichtung noch kleiner ausführen zu können, ist es auch bekannt, statt zweier Regelkörper lediglich einen Regelkörper zu verwenden, der mit beiden Kanälen zusammenwirkt. Bei diesen Ausführungen mündet der Abgasrückführkanal üblicherweise unmittelbar stromabwärts der als Drosselventil dienenden Klappe in den Luftansaugkanal. Bei gewünschter Erhöhung der Abgasrückführrate wird dann mit Öffnen des Abgasrückführventils in gleichem Maße die Drosselklappe geschlossen, was neben der Erhöhung des freien Querschnitts des Abgasrückführkanals auch eine Erhöhung des Druckgefälles im Abgasrückführkanal zur Folge hat, wodurch der Anteil des Abgases im Vergleich zur angesaugten Luftmenge zusätzlich erhöht wird.

Eine derartige Anordnung wird beispielsweise in der DE 10 2012 101 851 B4 offenbart, bei der zwei parallel angeordnete Klappen über eine gemeinsame Drehwelle betätigt werden, so dass mit Drehung der beiden Klappen sich die erste Klappe vom Ventilsitz des Luftansaugkanals entfernt, während sich die zweite Klappe dem Ventilsitz des Abgasrückführkanals, der senkrecht zum Ventilsitz des Luftansaugkanals angeordnet ist, nähert bis der Luftansaugkanal vollständig geöffnet ist und der Abgasrückführkanal vollständig verschlossen ist. Sowohl für die den Abgasrückführkanal beherrschende zweite Klappe als auch für die den Luftansaugkanal beherrschende erste Klappe sind die Ventilsitze jeweils als Anschläge ausgebildet, gegen die die Klappen in ihrer den jeweiligen Kanal verschließenden Stellung vollumfänglich aufliegen. Die Drehwelle ist an einer Gehäusewand zwischen der Mündung des Abgasrückführkanals und dem Ventilsitz im Luftansaugkanal angeordnet, so dass die Strömung nicht durch die Welle oder bei verschlossenem Abgasrückführkanal durch den Klappenkörper beeinflusst wird.

Eine ähnliche Anordnung ist auch aus der DE 10 2014 200 699 A1 bekannt.

Auch ist aus der DE 10 2006 051 987 B4 eine zentrisch gelagerte Drosselklappe bekannt, auf deren Oberfläche mehrere senkrecht zur Klappenwelle verlaufende Rippen ausgebildet sind, die dazu dienen, den Gasstrom zu begradigen.

Auch die WO 2009/071403 A1 offenbart eine Drosselklappe auf deren Oberflächen Rippen ausgebildet sind, die sich von der zentrisch gelagerten Welle nach außen erstrecken, wobei die Höhe der Rippen mit wachsendem Abstand zur Welle abnimmt. Diese Rippen dienen zur Verstärkung des Klappenkörpers.

Aus der DE 102 40 762 A1 und der JP 2001-098959 A sind Drosselklappen bekannt, bei der eine Drosselklappenhälfte mit Windleitblechen versehen ist, um die Geräuschemissionen zu senken.

Bei einer Anordnung dieser Drosselklappen und kombinierten Abgasrückführ- und Drosselklappen vor einem Verdichter eines Turboladers in einem Ansaugsystem entstehen Druckverluste und daraus resultierende Leistungseinbußen des Verdichters eines Turboladers sowie des nachfolgenden Verbrennungsmotors, da durch die Zusammenführung der Gasströme eine Einschnürung des zur Verfügung stehenden Durchströmungsquerschnitts durch das Drosseln mittels der Klappen erfolgt. Zusätzlich führt dieses Drosseln und das Ineinanderströmen der beiden Gasströme zu Turbulenzen, die ebenfalls einen Strömungswiderstand erzeugen.

Es ist daher Aufgabe der Erfindung, eine Regelvorrichtung für eine Verbrennungskraftmaschine zu schaffen, mit der bei guter Regelbarkeit des Luftstroms und des Abgasstroms im Vergleich zu bekannten Ausführungen Druckverluste vermieden werden und so eine Leistungssteigerung eines nachgeschalteten Verdichters beziehungsweise nachgeschalteten Verbrennungsmotors erreichbar ist.

Diese Aufgabe wird durch eine Regelvorrichtung für eine Verbrennungskraftmaschine mit den Merkmalen des Hauptanspruchs gelöst.

Dadurch, dass im Ansaugkanal ein erster Ventilsitz ausgebildet ist, an dem der Regelkörper mit seiner ersten Oberfläche, auf der Leitrippen ausgebildet sind, in seiner ersten Endposition mit einem leitrippenfreien Bereich axial anliegt, wird der angesaugte Luftstrom, welcher insbesondere in den kritischen Betriebszuständen des Verdichters unter Volllast den deutlich höheren Anteil des Mischgases stellt, gerichtet durch den Ansaugkanal geleitet. Je nach Ausführung und Anordnung der Leitrippen kann hierdurch der Strömungswiderstand reduziert werden, indem Turbulenzen vermindert werden oder es kann die Anströmung des Verdichters optimiert werden, indem diese optimal zum Einlass ausgerichtet wird. Durch die axiale Auflage der Oberfläche auf dem Ventilsitz wird ein beinahe leckagefreier Verschluss des Ansaugkanals erreicht. Trotz der Leitrippen kann auch der Ansaugkanal sehr gut abgedichtet verschlossen werden, indem zur axialen Auflage der Oberfläche auf dem Ventilsitz ein Bereich genutzt wird, an dem keine Leitrippen ausgebildet sind.

Des Weiteren ist es vorteilhaft, wenn an der Mündung des Abgasrückführkanals ein zweiter Ventilsitz ausgebildet ist, gegen den die zweite Oberfläche des Regelkörpers in seiner zweiten Endposition anliegt. So kann auch der Abgasrückführkanal sehr gut abgedichtet verschlossen werden. Bei Nutzung beider Klappenoberflächen sind der Aufbau und die Montage des Regelkörpers besonders einfach und kostengünstig durchführbar.

In einer alternativen vorteilhaften Weiterbildung weist der Regelkörper eine exzentrisch auf der Welle befestigte Klappe mit der ersten Oberfläche und der zweiten Oberfläche und ein Koppelglied auf, dass sich von der zweiten Oberfläche aus erstreckt und an dem ein Schließglied ausgebildet ist, welches mit dem zweiten Ventilsitz zusammenwirkt. Der Aufbau eines solchen Regelkörpers ist zwar etwas aufwendiger, jedoch kann durch eine solche Ausführung ein Versatz zwischen den beiden Ventilsitzen ausgeglichen werden und dennoch ein sicherer Verschluss erzielt werden. Des Weiteren kann der Bereich der Mündung des Abgasrückführkanals kleiner gewählt werden, so dass die Fläche des Schließgliedes kleiner gewählt werden kann als die der Klappe. So kann der benötigte Bauraum reduziert werden.

Die Leitrippen erstrecken sich vorteilhafterweise parallel zueinander entlang der ersten Oberfläche, wodurch ein Gleichrichten des Luftstroms erfolgt, was zu geringen Druckverlusten führt und es ermöglicht, den Luftstrom gezielt auszurichten, wodurch auch die auftretenden Turbulenzen beim Einströmen des Abgasstroms in den Luftstrom verringert werden.

In einer hierzu weiterführenden vorteilhaften Ausführungsform erstrecken sich die Leitrippen senkrecht zur Drehachse des Regelkörpers. Der Luftstrom wird somit bei geringen Druckverlusten gezielt gerade im Ansaugkanal zum Einlass des Verdichters geführt. Auch die gegebenenfalls vorhandenen Wirbel oder Turbulenzen des Abgasstroms werden zumindest teilweise durch den Luftstrom gerichtet, so dass der Mischgasstrom im Wesentlichen parallel und gerade in einen nachfolgenden Verdichter eingeführt wird, wodurch dessen Wirkungsgrad erhöht wird.

Alternativ ist es möglich, dass sich die Leitrippen unter einem festen Winkel zur Drehachse des Regelkörpers angestellt erstrecken. Durch eine derartige Ausführung kann dem Luftstrom ein Winkel zur Hauptströmungsrichtung der Luft aufgezwungen werden, wodurch eine spiralförmige Strömung zur Leistungsverbesserung am Eingang des Verdichters erzeugt werden kann. Bei einer derartigen Ausführung dienen die Leitrippen als Leitgitter des Laufrades, dessen Anströmung insbesondere für bestimmte Betriebszustände auf diese Weise optimiert werden kann.

Eine noch stärkere Spiralströmung bei verringertem Druckverlust wird erzielt, indem die Leitrippen mit wachsendem Abstand zur Drehachse eine wachsende Neigung zu einer Senkrechten auf die Drehachse aufweisen. Dies hat zur Folge, dass weiterhin die verbesserte Anströmung des Laufrades des Verdichters erreicht wird, jedoch gleichzeitig dessen Füllung durch die verringerten Strömungswiderstände im Vergleich zur zuvor beschriebenen Ausführung erhöht wird.

Alternativ ist es vorteilhaft, die Leitrippen in Erstreckungsrichtung von der Drehachse aus zum von der Drehachse entfernten Ende sich voneinander entfernend auszubilden. Dies bedeutet, dass durch die Leitrippen eine Art Fächer aufgespannt wird, dessen schmales Ende an der Seite der Welle ausgebildet ist. Auf diese Weise wird der Luftstrom in die wandnahen Bereiche gelenkt, so dass das Abgas insbesondere aus einem kleineren zentralen Abgaskanal mit geringem Strömungswiderstand in das Innere des Kanals einströmen kann. Durch diese Bündelung des Abgasstroms im zentralen Bereich des Kanals und damit in wandentfernten Bereichen kann eine Kondensation von Wasser aus dem Abgas an gegebenenfalls kalten Kanalwänden verringert werden, wodurch die Lebensdauer des Verdichter erhöht wird.

Vorzugsweise ist die erste Oberfläche gewölbt ausgebildet. Eine derartige Wölbung dient ebenfalls zur Leitung des Luftstroms in einen gewünschten Bereich, jedoch in einer anderen Ebene. So ergibt sich beispielswiese bei einer konvexen Ausbildung ein geringerer Strömungswiderstand im Ansaugkanal bei lediglich geringfügig geöffnetem Ansaugkanal. Die Wölbung wird entsprechend ebenfalls genutzt, um den Luftstrom bei möglichst geringem Druckverlust in gewünschte Bereiche des Kanals zu leiten.

Entsprechend sind die Leitrippen vorzugsweise derart ausgeformt, dass der Luftstrom in einen definierten Bereich des Ansaugkanals einleitbar ist. Diese Ausformung kann von der Ausbildung des Verdichtereinlasses und folgenden Kanalführungen abhängig sein. Je nach Verbrennungsmotor kann entweder eine gute Durchmischung, eine Schichtenströmung, gerade oder Drallströmungen gewünscht sein. Je nach geforderter Strömung kann zur Verbesserung der Motorleistung eine entsprechende Stellung der Leitrippen ausgebildet werden.

Zusätzlich ist es vorteilhaft, wenn der erste Ventilsitz zur Mittelachse des Ansaugkanals einen Winkel von 70° bis 80° einschließt. Ein derartiger kleinerer Stellwinkel führt dazu, dass über den gesamten Stellbereich der Luft- und der Abgasstrom bei Drehung der Klappe ebenfalls geändert werden. In diesem Stellbereich bleibt somit die Steigung der Regelkurve in großen Abschnitten unverändert.

Vorzugsweise weist der erste Ventilsitz einen geringeren Umfang auf als der zum ersten Ventilsitz stromabwärtige Abschnitt des Ansaugkanals und der Regelkörper taucht in seiner den Abgasrückführkanal verschließenden zweiten Endposition in eine Ausnehmung im Ansaugkanal ein, die im Strömungsschatten des stromaufwärtigen Abschnitts des Ansaugkanals angeordnet ist. Dies bedeutet, dass bei geöffnetem Ansaugkanal kein Strömungswiderstand durch die Klappe vorhanden ist, so dass der Verdichter mit einem größeren Luftstrom versorgt wird. Zusätzlich wird der Kanal durch die anliegende Klappe im Wesentlichen verlängert, so dass eine Wirbelbildung hinter dem Ventilsitz durch eine Anströmung des Klappenkörpers selbst, die ebenfalls zu Strömungsverlusten führen würde, auch verhindert wird.

Es wird somit eine Regelvorrichtung geschaffen, mit der sowohl der Luftmassenstrom im Ansaugkanal als auch der Abgasmassenstrom des Abgasrückführkreises regelbar ist, wobei gleichzeitig die Leistung eines nachfolgenden Verdichters zur Aufladung eines Verbrennungsmotors durch verbesserte Strömungsführung optimiert wird. Die Strömungsführung kann durch die Leitrippen an die jeweiligen Erfordernisse des Verbrennungsmotors beziehungsweise an die vorhandenen geforderten Einströmbedingungen des verwendeten Verdichters angepasst werden, wobei Druckverluste durch auftretende Strömungswiderstände oder Turbulenzen vermieden werden.

Ein Ausführungsbeispiel einer erfindungsgemäßen Regelvorrichtung ist in den Figuren dargestellt und wird nachfolgend beschrieben.
Die Figur 1 zeigt eine Seitenansicht einer erfindungsgemäßen Regelvorrichtung in geschnittener Darstellung.
Die Figur 2 zeigt eine perspektivische Ansicht der erfindungsgemäßen Regelvorrichtung aus Figur 1 in geschnittener Darstellung.
Die Figur 3 zeigt eine Ansicht der erfindungsgemäßen Regelvorrichtung von oben in geschnittener Darstellung.
Die Figuren 4 a) bis d) zeigen schematisch mögliche Anordnungen der Leitrippen einer erfindungsgemäßen Regelvorrichtung.

Die erfindungsgemäße Regelvorrichtung besteht aus einem Gehäuse 10, welches einen Ansaugkanal 12 begrenzt und an dem eine Mündung 14 eines Abgasrückführkanals 16 ausgebildet ist. Der Ansaugkanal 12 verläuft im Wesentlichen in gerader Richtung zu einem nicht dargestellten axialen Einlass eines Verdichtergehäuses eines Turboladers, während der Abgasrückführkanal 16 etwa senkrecht zum Ansaugkanal 12 in diesen mündet.

Das Gehäuse 10 besteht aus einem ersten im Wesentlichen rohrförmig ausgebildeten Ansauggehäuse 18, dessen stromabwärtiges Ende schräg ausgebildet ist und einen Winkel α von etwa 80° zu einer Mittelachse des Ansaugkanals 12 einschließt. Dieses Ansauggehäuse 18 ragt mit diesem stromabwärtigen Ende in ein Mischgehäuse 20, beziehungsweise wird in das Mischgehäuse 20 bis zur Anlage eines Flansches 22 eingeschoben, über den das Ansauggehäuse 18 mittels Schrauben 24 am Mischgehäuse 20 befestigt ist.

Die Mündung 14 des Abgasrückführkanals 16 ragt seitlich in eine Öffnung 26 des Mischgehäuses 20 und ist als separates Gehäuseteil ausgebildet. Das Mischgehäuse 20 bildet eine Verlängerung des Ansaugkanals 12, der wiederum im Folgenden in den axialen Einlass des Verdichtergehäuses mündet. Im Mischgehäuse 20 ist eine Welle 28 um eine Drehachse 30 drehbar gelagert, die über einen Aktor 32 betätigt werden kann. Die Drehachse 30 dieser Welle 28 ist senkrecht zu den Mittelachsen des Ansaugkanals 12 und des Abgasrückführkanals 16 angeordnet und befindet sich zwischen der Mündung 14 des Abgasrückführkanals 16 am bezüglich des Luftstroms stromaufwärtigen Ende des Abgasrückführkanals 16 und dem axialen Ende des Ansauggehäuses 18 an dessen zum Abgasrückführkanal 16 gewandten Seite. Der Durchströmungsquerschnitt des Ansauggehäuses 18 ist kleiner als der des Mischgehäuses 20, wobei das Ansauggehäuse 18 derart am Mischgehäuse 20 befestigt ist und in dieses hineinragt, dass eine stromabwärtig zur Mündung 14 des Abgasrückführkanals 16 ausgebildete Ausnehmung 34 im Strömungsschatten des Luftstroms aus dem Ansauggehäuse 18 angeordnet ist, in der die Welle 28 das Mischgehäuse 20 durchdringt.

An dieser exzentrisch im Ansaugkanal 12 angeordneten Welle 28 ist ein Regelkörper 36 befestigt, der aus einer Klappe 38 sowie einem über ein Koppelglied 40 an der ersten Klappe 38 befestigten Schließglied 42 besteht. Die Klappe 38 erstreckt sich von der Welle 28 aus in das Innere des Mischgehäuses 20 und beherrscht den Durchströmungsquerschnitt des Ansaugkanals 12. Hierzu wirkt die Klappe 38 mit ihrer ersten Oberfläche 44 mit dem axialen Ende des Ansauggehäuses 18 zusammen, das als erster Ventilsitz 46 dient, auf dem die Klappe 38 im den Ansaugkanal 12 verschließenden Zustand mit ihrer ersten Oberfläche 44 in einer ersten Endposition anliegt, so dass in diesem Zustand ein Normalenvektor der ersten Oberfläche 44 zur stromaufwärtigen Seite des Ansaugkanals 12 beziehungsweise zum Ansauggehäuse 22 weist.

In der Klappe 38 ist eine Bohrung ausgebildet, in der das Koppelglied 40 an der Klappe 38 befestigt ist. Dieses Koppelglied 40 erstreckt sich senkrecht von einer zur ersten Oberfläche 44 gegenüberliegenden zweiten Oberfläche 48 und durchdringt mit seinem gegenüberliegenden Ende das Schließglied 42, welches wiederum an diesem Ende des Koppelgliedes 40 befestigt ist. Diese Befestigung des Schließgliedes 42 führt dazu, dass bei Drehung der Welle 28 in eine zweite Endposition, in der das Schließglied 42 auf einem am Ende der Mündung 14 des Abgasrückführkanals 16 ausgebildeten zweiten Ventilsitz 50 aufliegt, ein Verschluss des Abgasrückführkanals 16 erfolgt. In dieser zweiten Endposition weist entsprechend ein Normalenvektor der zweiten Oberfläche 48 in den Abgasrückführkanal 16.

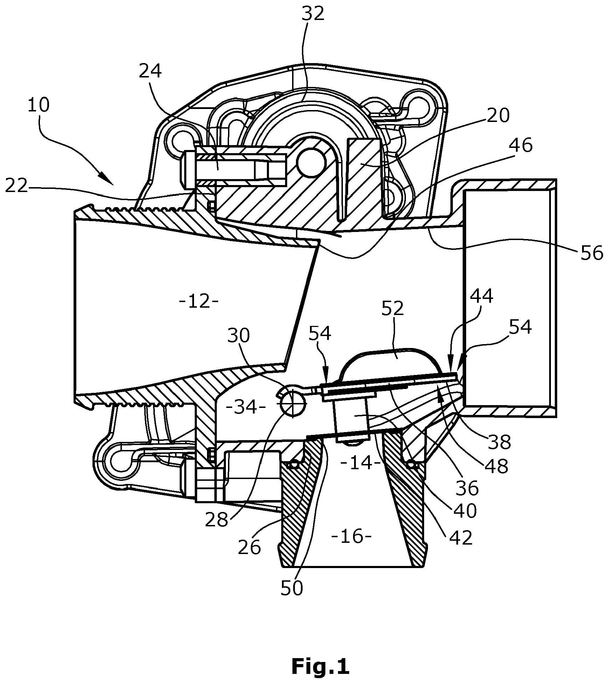

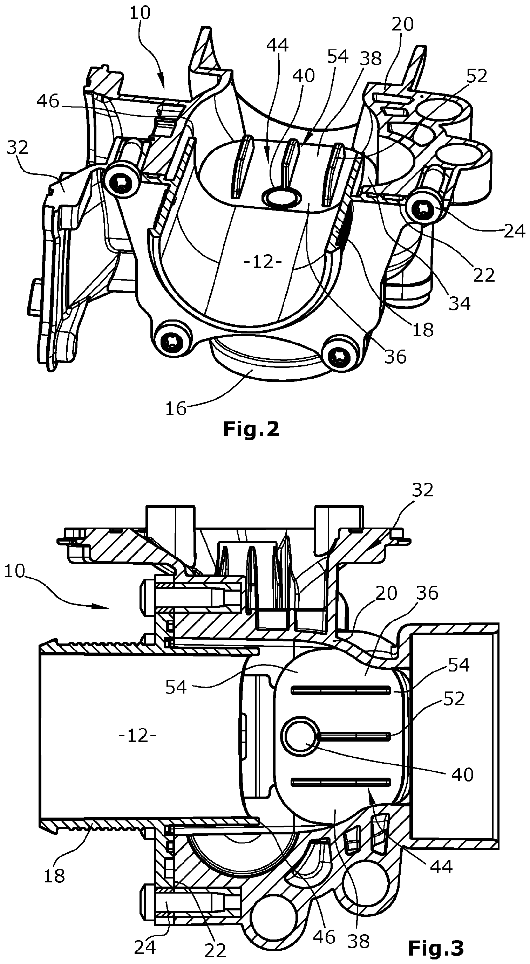

Erfindungsgemäß sind auf der ersten Oberfläche 44 der Klappe 38 mehrere Leitrippen 52 ausgebildet, welche sich bei Auflage der Klappe 38 auf dem ersten Ventilsitz 46 in das Ansauggehäuse 18 erstrecken. Die Klappe 38 weist einen Bereich 54 auf, an dem keine Leitrippen 52 ausgebildet sind. Mit diesem leitrippenfreien Bereich 54 liegt die Oberfläche 44 der Klappe 38 auf dem ersten Ventilsitz 46 bei verschlossenem Ansaugkanal auf. Bei einer derartigen Ausführung ist selbstverständlich darauf zu achten, dass die Leitrippen 52 so angeordnet werden, dass die Drehbewegung der Welle 28 aus der den Ansaugkanal 12 verschließenden Endposition nicht durch ein Anschlagen der Leitrippen 52 an Kanalwänden des Ansauggehäuses 18 gestört wird. Sobald die Oberfläche 44 vom Ventilsitz 46 abgehoben wird, strömt ein Luftstrom aus dem Ansauggehäuse 18 in das Mischgehäuse 20 und zwar entlang der Leitrippen 52, welche sich bei der Ausführungsform gemäß der Figuren 1 bis 3 über ihre gesamte Länge auf der ersten Oberfläche 44 senkrecht zur Drehachse 30 und parallel zueinander erstrecken.

Die Leitrippen 52 sind entweder mittels stoffschlüssiger Verbindung mit der Klappe 38 verbunden oder einstückig mit dieser hergestellt. Auch kann die Klappe 38 einen Grundkörper aus Metall aufweisen, der bespritzt wird, wobei diese an dieser Kunststoffschicht die Leitrippen 52 ausgebildet werden.

Bei der in den Figuren 1 bis 3 dargestellten Ausbildung der Leitrippen 52 wird der Luftstrom, sobald die Klappe 38 vom Ventilsitz 46 abgehoben wird, gleichgerichtet. Dies erfolgt immer im klappennahen Bereich, also außer bei vollständig verschlossenem Abgasrückführkanal 16 in dem Bereich, welcher sich unmittelbar benachbart zu dem Bereich befindet, der vom Abgas aus dem Abgasrückführkanal 18 durchströmt wird. Dies bedeutet, dass der Abgasstrom immer in einen gleichgerichteten Luftstrom eingeführt wird, was eine gleichmäßige langsam verlaufende Durchmischung zur Folge hat. Größere Turbulenzen und daraus folgend ein erhöhter Druckverlust werden so vermieden. Dieser geringe Strömungswiderstand führt zusätzlich dazu, dass eine große Mischgasmenge dem Verdichter über den Verdichtereinlass zugeführt werden kann, wodurch die Leistung des folgenden Verbrennungsmotors gesteigert wird.

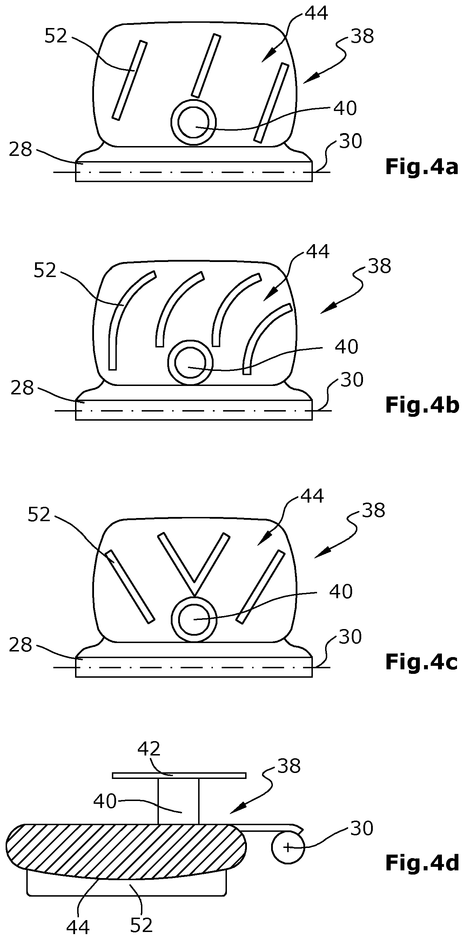

In den Figuren 4 a) bis d) sind verschiedene weitere vorteilhafte Ausbildungen dieser Leitrippen 52 auf der ersten Oberfläche 44 dargestellt, deren Form und Anordnung je nach Ausführung und Größe des folgenden Verdichters und des Verbrennungsmotors sowie Einsatzbereichen unterschiedlich sein kann.

So zeigt die Figur 4 a) Leitrippen 52 auf der ersten Oberfläche 44 der Klappe 38, welche um einen Winkel von etwa 20° zu einer Senkrechten auf die Drehachse 30 der Welle 28 angestellt sind. Dies hat zur Folge, dass ein Luftstrom durch diese Leitrippen 52 zur Seite abgelenkt wird und dem Luftstrom ein Drall aufgezwungen wird. Dieser Drall führt dazu, dass auch der Mischgasstrom drallbehaftet ist und das Abgas schneller mit der Luft vermischt wird. Durch das drallförmige Einströmen in einen Einlass des Verdichters kann dessen Leistung gegebenenfalls verbessert werden.

Auch die in der Figur 4 b) dargestellte Version hat eine derartige Leistungssteigerung des folgenden Verdichters aufgrund eines aufgeprägten Dralls zur Folge, allerdings bei verringertem Strömungswiderstand und damit erhöhtem Gesamtmischgasstrom. In dieser Version sind die erneut parallel verlaufenden Leitrippen 52 bogenförmig ausgebildet, wobei die Neigung zur Senkrechten auf die Drehachse 30 der Welle 28 mit wachsendem Abstand von der Welle 28 ebenfalls wächst. Durch diese allmähliche Ablenkung des Luftstroms im Vergleich zur in Figur 4 a) dargestellten Version entstehen weniger Turbulenzen und daraus folgend verringert sich der Strömungswiderstand. Zusätzlich wird die Luft stark in wandnahe Bereiche gelenkt, wodurch sich der Abgasstrom eher in zentralen Bereichen des Ansaugkanals sammelt. So kann bei geringen Temperaturen eine Kondensation des Wassers aus dem Abgas an kalten Außenwänden vermieden werden.

Die Figur 4 c) zeigt eine weitere mögliche Ausbildung der Leitrippen 52 auf der Oberfläche 44. Die Leitrippen 52 sind V-förmig zueinander angeordnet, so dass der Abstand zueinander entsprechend mit wachsendem Abstand von der Drehachse 30 ebenfalls wächst. Im dargestellten Ausführungsbeispiel wird der Luftstrom im klappennahen Bereich und damit im Einströmbereich des Abgases in den Luftstrom entsprechend ebenfalls aus dem zentralen Kanalbereich in den wandnahen Bereich abgelenkt, jedoch ohne dabei einen Drall zu erzeugen. Diese zentrale Einleitung des Abgasstroms hat erneut den Vorteil, dass der heiße und Wasserdampf transportierende Abgasstrom in einen Bereich eingeleitet wird, in dem er nicht direkt auf die je nach Umgebungsbedingungen unter Umständen kalten Wände 56 des Ansaugkanals 12 geleitet wird. Entsprechend wird eine gegebenenfalls auftretende Kondensation des Wassers deutlich verringert, wodurch wiederum Schäden an den Schaufeln des Verdichters vermieden werden Dabei bleibt der Strömungswiderstand relativ gering.

Bei der in Figur 4 d) dargestellten Ausbildung sind die Leitrippen 52 wieder senkrecht zur Drehachse 30 ausgebildet, jedoch befinden sie sich auf einer im Querschnitt konvex gewölbten Oberfläche 44, was dazu führt, dass der Luftstrom bei leicht geöffneter Klappe 38 einen geringen Winkel zu den umliegenden Wänden 56 aufweist. Auch dies verringert den Strömungswiderstand.

Die beschriebene Regelvorrichtung eignet sich somit zur sehr exakten Dosierung eines Luftmassenstroms und eines Abgasstroms mit nur einem Aktor, wobei die Strömungen durch die Verwendung von Leitrippen an der dem Luftstrom zugewandten ersten Oberfläche der Klappe beinahe beliebig gerichtet werden können, um die Leistung der Verbrennungskraftmaschine beziehungsweise die Leistung eines nachgeschalteten Verdichters zu optimieren, ohne weitere Einbauten verwenden zu müssen. Der Luftstrom kann hierzu durch entsprechende Anordnung der Rippen gleichgerichtet, mit einem Drall beaufschlagt oder auch in wandnahe Bereiche geleitet werden. Zusätzlich kann er entweder zum Abgasstrom oder von diesem entfernter eingeleitet werden. Neben auf diese Weise beeinflussbaren Vermischungsgraden können Strömungswiderstände oder Kondensation des Abgases beeinflusst werden.

Es sollte deutlich sein, dass der Schutzbereich der vorliegenden Anmeldung nicht auf das beschriebene Ausführungsbeispiel beschränkt ist. Es sind verschiedene Versionen der Stellung der Leitrippen ebenso denkbar, wie unterschiedliche Formen der Oberflächen der Klappe. Zusätzlich ist es, wie beschrieben möglich, die Regelvorrichtung mit oder ohne zusätzliches Schließglied auszuführen.

## Patentansprüche

1. Regelvorrichtung für eine Verbrennungskraftmaschine mit
einem Ansaugkanal (12),
einem Abgasrückführkanal (16), der in den Ansaugkanal (12) mündet,
einem Gehäuse (10), in dem der Ansaugkanal (12) und der Abgasrückführkanal (16) ausgebildet sind,
einer als Drehachse (30) dienenden Welle (28), auf der ein Regelkörper (36) exzentrisch gelagert ist, und die senkrecht zu den Mittelachsen des Ansaugkanals (12) und des Abgasrückführkanals (16) angeordnet ist,
wobei in einer ersten Endposition, in der der Ansaugkanal (12) stromaufwärts einer Mündung des Abgasrückführkanals (16) zumindest gedrosselt ist, ein Normalenvektor einer ersten Oberfläche (44) des Regelkörpers (36) zur stromaufwärtigen Seite des Ansaugkanals (12) weist und in einer zweiten Endposition, in der der Abgasrückführkanal (16) verschlossen ist, ein Normalenvektor einer zweiten Oberfläche (48) des Regelkörpers (36) zum Abgasrückführkanal (16) weist,
**dadurch gekennzeichnet, dass**
im Ansaugkanal (12) ein erster Ventilsitz (46) ausgebildet ist, an dem der Regelkörper (36) mit seiner ersten Oberfläche (44), auf der Leitrippen (52) ausgebildet sind, in seiner ersten Endposition mit einem leitrippenfreien Bereich (54) axial anliegt.

2. Regelvorrichtung für eine Verbrennungskraftmaschine nach Anspruch 1,
**dadurch gekennzeichnet, dass**
an der Mündung (14) des Abgasrückführkanals (16) ein zweiter Ventilsitz (50) ausgebildet ist, gegen den die zweite Oberfläche (48) des Regelkörpers (36) in seiner zweiten Endposition anliegt.

3. Regelvorrichtung für eine Verbrennungskraftmaschine nach Anspruch 1,
**dadurch gekennzeichnet, dass**
der Regelkörper (36) eine exzentrisch auf der Welle (28) befestigte Klappe (38) mit der ersten Oberfläche (44) und der zweiten Oberfläche (48) und ein Koppelglied (40) aufweist, dass sich von der zweiten Oberfläche (48) aus erstreckt und an dem ein Schließglied (42) ausgebildet ist, welches mit dem zweiten Ventilsitz (50) zusammenwirkt.

4. Regelvorrichtung für eine Verbrennungskraftmaschine nach einem der vorhergehenden Ansprüche,
**dadurch gekennzeichnet, dass**
die Leitrippen (52) sich parallel zueinander entlang der ersten Oberfläche (44) erstrecken.

5. Regelvorrichtung für eine Verbrennungskraftmaschine nach Anspruch 4,
**dadurch gekennzeichnet, dass**
sich die Leitrippen (52) senkrecht zur Drehachse (30) des Regelkörpers (36) erstrecken.

6. Regelvorrichtung für eine Verbrennungskraftmaschine nach Anspruch 4,
**dadurch gekennzeichnet, dass**
sich die Leitrippen (52) unter einem festen Winkel zur Drehachse (30) des Regelkörpers (36) angestellt erstrecken.

7. Regelvorrichtung für eine Verbrennungskraftmaschine nach Anspruch 4,
**dadurch gekennzeichnet, dass**
die Leitrippen (52) mit wachsendem Abstand zur Drehachse (30) eine wachsende Neigung zu einer Senkrechten auf die Drehachse (30) aufweisen.

8. Regelvorrichtung für eine Verbrennungskraftmaschine nach einem der Ansprüche 1 bis 3,
**dadurch gekennzeichnet, dass**
die Leitrippen (52) in Erstreckungsrichtung von der Drehachse (30) aus zum von der Drehachse (30) entfernten Ende sich voneinander entfernend ausgebildet sind.

9. Regelvorrichtung für eine Verbrennungskraftmaschine nach einem der vorhergehenden Ansprüche,
**dadurch gekennzeichnet, dass**
die erste Oberfläche (44) gewölbt ausgebildet ist.

10. Regelvorrichtung für eine Verbrennungskraftmaschine nach einem der Ansprüche 1 bis 3,
**dadurch gekennzeichnet, dass**
die Leitrippen (52) derart ausgeformt sind, dass der Luftstrom in einen definierten Bereich des Ansaugkanals (12) einleitbar ist.

11. Regelvorrichtung für eine Verbrennungskraftmaschine nach einem der vorhergehenden Ansprüche,
**dadurch gekennzeichnet, dass**
der erste Ventilsitz (46) zur Mittelachse des Ansaugkanals (12) einen Winkel von 70° bis 80° einschließt.

12. Regelvorrichtung für eine Verbrennungskraftmaschine nach einem der vorhergehenden Ansprüche,
**dadurch gekennzeichnet, dass**
der erste Ventilsitz (46) einen geringeren Umfang aufweist als der zum ersten Ventilsitz (46) stromabwärtige Abschnitt des Ansaugkanals (12) und der Regelkörper (36) in seiner den Abgasrückführkanal (16) verschließenden zweiten Endposition in eine Ausnehmung (34) im Ansaugkanal (12) eintaucht, die im Strömungsschatten des stromaufwärtigen Abschnitts des Ansaugkanals (12) angeordnet ist.

## Claims

1. Control device for an internal combustion engine comprising
an intake duct (12),
an exhaust gas recirculation duct (16) opening into the intake duct (12),
a housing (10) in which the intake duct (12) and the exhaust gas recirculation duct (16) are formed,
a shaft (28) acting as an axis of rotation (30), on which a control body (36) is supported eccentrically, and which is arranged perpendicular to the center axes of the intake duct (12) and the exhaust gas recirculation duct (16),
wherein in a first end position, in which the intake duct (12) is at least throttled upstream of an orifice of the exhaust gas recirculation duct (16), a normal vector of a first surface (44) of the control body (36) is directed to the upstream side of the intake duct (12), and in a second end position in which the exhaust gas recirculation duct (16) is closed, a normal vector of a second surface (48) of the control body (36) is directed to the exhaust gas recirculation duct (16),
**characterized in that**
a first valve seat (46) is formed in the intake duct (12), on which the control body (36), in its first end position, abuts axially with its first surface (44), on which guide ribs (52) are formed, by a rib free region (54).

2. Control device for an internal combustion engine of claim 1, **characterized in that** a second valve seat (50) is formed at the orifice (14) of the exhaust gas recirculation duct (16), against which the second surface (48) of the control body (36) abuts in its second end position.

3. Control device for an internal combustion engine of claim 1, **characterized in that** the control body (36) comprises a flap (38) eccentrically mounted on the shaft (28) comprising said first surface (44) and said second surface (48) and a coupling member (40) that extends from the second surface (48) and on which a closing member (42) is formed, which cooperates with the second valve seat (50).

4. Control device for an internal combustion engine of one of the preceding claims, **characterized in that** the guide ribs (52) extend parallel to each other along the first surface (44).

5. Control device for an internal combustion engine of claim 4, **characterized in that** the guide ribs (52) extend perpendicular to the axis of rotation (30) of the control body (36).

6. Control device for an internal combustion engine of claim 4, **characterized in that** the guide ribs (52) extend under a fixed angle to the axis of rotation (30) of the control body (36).

7. Control device for an internal combustion engine of claim 4, **characterized in that**, with an increasing distance from the axis of rotation (30), the guide ribs (52) have an increasing inclination to a perpendicular to the axis of rotation (30).

8. Control device for an internal combustion engine of one of claims 1 to 3, **characterized in that** the guide ribs (52) are formed to separate in the direction from the axis of rotation (30) to the end remote from the axis of rotation (30).

9. Control device for an internal combustion engine of one of the preceding claims, **characterized in that** the first surface (44) is curved.

10. Control device for an internal combustion engine of one of claims 1 to 3, **characterized in that** the guide ribs (52) are formed such that the air flow can be introduced into a defined region of the intake duct (12).

11. Control device for an internal combustion engine of one of the preceding claims, **characterized in that** the first valve seat (46) includes an angle of 70° to 80° with the center axis of the intake duct (12).

12. Control device for an internal combustion engine of one of the preceding claims, **characterized in that** the first valve seat (46) has a smaller circumference than the section of the intake duct (12) downstream of the first valve seat (46), and the control body (36), in its second end position occluding the exhaust gas recirculation duct (16), dives into a recess (34) in the intake duct (12), which recess is arranged in the non-turbulent region of the upstream section of the intake duct (12).

## Revendications

1. Dispositif de commande pour moteur à combustion interne, comportant
un canal d'admission (12),
un canal de recirculation des gaz d'échappement (16) s'ouvrant dans le canal d'admission (12),
un boitier (10) dans lequel sont formés le canal d'admission (12) et le canal de recirculation des gaz d'échappement (16),
un arbre (28) servant comme axe de rotation (30) sur lequel un corps de commande (36) est supporté de manière excentrique et qui est disposé perpendiculairement aux axes centraux du canal d'admission (12) et du canal de recirculation des gaz d'échappement (16),
ou, dans une première position extrême, dans laquelle le canal d'admission (12) est au moins étranglé en amont d'un orifice du canal de recyclage de gaz d'échappement (16), un vecteur normal d'une première surface (44) du corps de commande (36) est orienté vers le côté amont du canal d'admission (12) et, dans une deuxième position extrême, dans laquelle le canal de recirculation des gaz d'échappement (16) est fermé, un vecteur normal d'une deuxième surface (48) du corps de commande (36) est orienté vers le canal de recirculation des gaz d'échappement (16),
**caractérisé en ce que**
un premier siège de soupape (46) est formé dans le canal d'admission (12), sur lequel siège le corps de commande (36) repose axialement, dans sa première position d'extrémité, avec sa première surface (44), sur laquelle des nervures de guidage (52) sont formées, par une région sans nervure (54).

2. Dispositif de commande pour moteur à combustion interne selon la revendication 1, **caractérisé en ce que**, à l'orifice (14) du canal de recirculation des gaz d'échappement (16), un deuxième siège de soupape (50) est formé, contre lequel la seconde surface (48) du corps de commande (36) repose dans sa deuxième position finale.

3. Dispositif de commande pour moteur à combustion interne selon la revendication 1, **caractérisé en ce que** le corps de commande (36) présente un clapet (38) monté excentriquement sur l'arbre (28), le clapet ayant la première surface (44) et la deuxième surface (48) et un élément de couplage (40) s'étendant à partir de la deuxième surface (48) et sur lequel est formé un élément de fermeture (42) qui coopère avec le deuxième siège de soupape (50).

4. Dispositif de commande pour moteur à combustion interne selon l'une quelconque des revendications précédentes, **caractérisé en ce que** les nervures de guidage (52) s'étendent parallèlement les unes aux autres le long de la première surface (44).

5. Dispositif de commande pour moteur à combustion interne selon la revendication 4, **caractérisé en ce que** les nervures de guidage (52) s'étendent perpendiculairement à l'axe de rotation (30) du corps de commande (36).

6. Dispositif de commande pour moteur à combustion interne selon la revendication 4, **caractérisé en ce que** les nervures de guidage (52) s'étendent sous un angle fixe par rapport à l'axe de rotation (30) du corps de commande (36).

7. Dispositif de commande pour moteur à combustion interne selon la revendication 4, **caractérisé en ce qu'**avec une distance croissante de l'axe de rotation (30), les nervures de guidage (52) ont une inclinaison croissante par rapport à une perpendiculaire à l'axe de rotation (30).

8. Dispositif de commande pour moteur à combustion interne selon l'une des revendications 1 à 3, **caractérisé en ce que** les nervures de guidage (52) s'étendent dans la direction de l'axe de rotation (30) à l'extrémité de l'axe de rotation (30) en se séparant l'une de l'autre.

9. Dispositif de commande pour moteur à combustion interne selon l'une quelconque des revendications précédentes, **caractérisé en ce que** la première surface (44) est incurvée.

10. Dispositif de commande pour moteur à combustion interne selon l'une des revendications 1 à 3, **caractérisé en ce que** les nervures de guidage (52) sont formées de sorte que le flux d'air peut être introduit dans une zone définie du canal d'admission (12).

11. Dispositif de commande pour moteur à combustion interne selon l'une quelconque des revendications précédentes, **caractérisé en ce que** le premier siège de soupape (46) forme un angle de 70° à 80° par rapport à l'axe central du conduit d'admission (12).

12. Dispositif de commande pour moteur à combustion interne selon l'une quelconque des revendications précédentes, **caractérisé en ce que** le premier siège de soupape (46) a une circonférence inférieure à celle de la section du canal d'admission (12) en aval du premier siège de soupape (46), et le corps de commande (36), dans la deuxième position extrême fermant le canal de recyclage des gaz d'échappement (16), s'immerge dans un évidement (34) du canal d'admission (12) qui est disposé dans la zone non turbulente de la section amont du canal d'admission (12).
